# EUROPÄISCHE PATENTSCHRIFT

(11) **EP 1 104 860 B1**
(45) Veröffentlichungstag und Bekanntmachung des Hinweises auf die Patenterteilung: **24.09.2003**
(21) Anmeldenummer: 00122963.2
(22) Anmeldetag: 23.10.2000
(51) Int. Cl.: F16K 1/20, F16K 15/03

(54) **Schaltbare Ventilklappe**
Switchable pivoting valve
Soupape pivotante débrayable

(30) Priorität: 04.12.1999 DE 19958572
(43) Veröffentlichungstag der Anmeldung: 06.06.2001
(73) Patentinhaber: Bayerische Motoren Werke Aktiengesellschaft, 80788 München (DE)
(72) Erfinder: Kölsch, Lothar, 57234 Wilnsdorf 3 (DE); Kranz, Gerhard, Dr., 35576 Wetzlar (DE); Kogler, Hans-Gerhard, 35578 Wetzlar (DE); Metz, Christoph, 35578 Wetzlar (DE); Schröter, Frank, 85368 Moosburg (DE); Faulstroh, Hans-Joachim, 86511 Schmiechen (DE)
(74) Vertreter: Stamer, Harald, Dipl,-Phys.

(56) Entgegenhaltungen:
- GB-A- 2 319 830
- US-A- 3 474 809
- US-A- 5 437 473

## Beschreibung

Die Erfindung betrifft eine schaltbare Ventilklappe mit mindestens einem um eine Längsachse schwenkbar in einem Gehäuseteil angeordneten Ventilteller zum Verschließen einer in dem Gehäuseteil vorgesehenen Ventilöffnung.

Ventilklappen werden z.B. zur Regelung des Innendrucks von gasgefüllten Behältern eingesetzt. Eine besondere Anwendung besteht bei Aufprallkissen zum Schutz von Insassen in einem Kraftfahrzeug, sogen. Airbags. Solche Aufprallkissen sind mit ihrem offenen Rand an einem festen Grundkörper befestigt, der eine schnell auslösbare Gaserzeugungseinheit zum Füllen des Aufprallkissens enthält und mit dem Fahrzeug verbunden ist. Die jeweils erzeugte Füllmenge in dem Aufprallkissen läßt sich zwar grundsätzlich über die Gaserzeugungseinheit regeln. Das ist aber mit einem erhöhten technischen Aufwand verbunden. Der resultierende Fülldruck ist bei gegebener Füllmenge und gegebenem Volumen des Aufprallkissens neben vielen anderen Parametern auch temperaturabhängig. Andererseits ist der Fülldruck entscheidend für die Schutzwirkung auf den aufprallenden Körper, wobei der optimale Fülldruck noch vom Gewicht des zu schützenden Körpers und seiner Geschwindigkeit beim Aufprall abhängt. Es hat daher nicht an Versuchen gefehlt, den Fülldruck des Aufprallkissens sowohl temperaturabhängig als auch für unterschiedliche Aufprallmassen einstellbar zu machen.

Aus GB 2 328 649 A ist es bekannt, im Gewebe des Aufprallkissens definierte Flächenbereiche mit verringerter Reißfestigkeit auszubilden. Bei Erreichen eines vorbestimmten Innendrucks reißen diese Bereiche auf, so daß eine durchschnittlich geeignete Abfederung des aufprallenden Körpers erreicht wird, die jedoch individuelle Körpergewichte und Stoßbeschleunigungen nicht berücksichtigt. Das Reißverhalten ist von der Werkstoffkombination und der Temperatur abhängig und kann zeitlich nicht gesteuert werden.

Ein vergleichbares Prinzip ist in US 5 899 494 beschrieben, bei dem die Aufreißbereiche durch eine aufgelegte Zündschnur definiert sind, die Bereiche des Gehäuses als Abströmöffnung freilegen soll. Die Aktivierung der Zündschnur ist zwar zeitlich und für unterschiedliche Bereiche steuerbar, wobei die Einwirkung des Schmelzens oder Brennens im Gehäuse aber verzögert und unkontrolliert erfolgt. Die Hitzeerzeugung muß sorgfältig dosiert werden, um anderweitige Zerstörungen des Kissengewebes zu vermeiden. Da andererseits das ausgebrannte Gehäusestück reproduzierbar öffnen muß, wird die Zündleistung im allgemeinen etwas höher ausgelegt als für das Durchschmelzen unbedingt erforderlich ist.

Aus EP 0 917 994 ist es bekannt, im Aufprallkissen eine Ausströmöffnung vorzusehen, deren Öffnungsquerschnitt durch eine Schlingenanordnung umgekehrt proportional zum aktuellen Innendruck eingestellt wird. Auch hier ist keine zeitliche und beschleunigungsabhängige Beeinflussung des Öffnungsquerschnitts möglich. Für die Anordnung und Befestigung der Schlingen sind nur besondere Bereiche des Aufprallkissens geeignet, die die Materialauswahl und Faltungsart des Aufprallkissen einschränken.

In der EP 0 536 677 B1 und EP 0 800 967 sind Ventilanordnungen beschrieben, die aus einem Schiebersystem bestehen, das an dem Grundkörper für das Aufprallkissen angeordnet ist. Eine Reihe von nach außen führenden Öffnungen sind durch Schieber abgedeckt, die durch eine Hebelmechanik oder einen motorischen Antrieb aus dem Abdeckbereich herausgeschoben werden können. Die Hebelmechanik wird temperaturabhängig gesteuert. Sie ist träge und erfordert einen hohen mechanischen Aufwand. Das gilt auch für den motorischen Antrieb.

Eine vergleichbare Schieberanordnung ist in GB 2 306 409 A offenbart. Um die Einströmöffnung des Gaserzeugers herum ist eine drehbare Sektorenblende angeordnet, aus der überschüssiges Gas beim Aufblasen des Aufprallkissens abströmen kann. Alternativ kann auch eine Irisblende zur Erzeugung eines veränderbaren Öffnungsquerschnitts vorgesehen sein. Als Antrieb für die Abdeckelemente ist ein pyrotechnisches Kolben-Zylinder-System vorgesehen. Der mechanische Aufwand für den Drehantrieb und die Führung der Abdeckelemente ist auch hier sehr hoch.

Aus DE 2 324 571 A1 ist eine am Grundkörper angebrachte Ventilklappe bekannt, die am Grundkörper federnd angelenkt ist und in Abhängigkeit vom Innendruck des Aufprallkissens eine variable Abströmöffnung erzeugt.

Der Erfindung lag daher die Aufgabe zugrunde, eine Ventilanordnung zu schaffen, die in Abhängigkeit vom Körpergewicht des Fahrzeuginsassen, der Intensität des Zusammenstoßes und des Zeitverlaufs des Aufpralls aktivierbar ist, die temperaturunabhängig arbeitet, einen reproduzierbaren Öffnungsquerschnitt mit hoher Zuverlässigkeit und Schnelligkeit erzeugt und sich bei geringem mechanischem Aufwand mit verminderten Bauraumanforderungen realisieren läßt.

Diese Aufgabe wird bei einer schaltbaren Ventilklappe der eingangs genannten Art erfindungsgemäß durch die kennzeichnenden Merkmale des Anspruchs 1 gelöst. Vorteilhafte Ausgestaltungen ergeben sich aus den Merkmalen der Unteransprüche.

Durch die aus einer Geschlossenstellung in eine Offenstellung schwenkbare Klappenkonstruktion ist gewährleistet, daß der gewünschte Öffnungsquerschnitt sicher eingestellt wird. Die auf dem Ventilteller angeordneten Stegelemente ermöglichen auf einfache Weise eine Verriegelung und Entriegelung durch elastische Deformation. Die geneigte Anordnung der Stegelemente zur Schaffung eines Hohlkanals schafft die Möglichkeit einer kontaktlosen Aktivierung der Ventilklappen. Die Ventilklappen können direkt in der Bodenfläche des Grundkörpers für das Aufprallkissen gelagert werden, so daß lediglich die Halterungen für die Verriegelung und den Druckmittelerzeuger die Bauhöhe beeinflussen. Die geringe Anzahl von Funktionselementen und ihre einfache Formgebung ermöglichen insbesondere auch die Herstellung der gesamten Vertilklappe als integrales Spritzformteil, das auf entsprechende Öffnungen Im Grundkörper aufgesetzt werden kann. Durch eine Mehrzahl solcher individuell aktivierbarer Ventilklappen kann der Öffnungsquerschnitt an individuelle Masse- und Zeitbedürfnisse angepaßt werden.

In der Zeichnung sind Ausführungsbeispiele der Ventilklappe schematisch dargestellt. Sie werden anhand der Figuren näher beschrieben. Die Figuren zeigen:
- Fig.1:: die perspektivische Ansicht einer Doppelklappen-Anordnung in Geschlossenstellung,
- Fig.2:: die gleiche Anordnung in Offenstellung,
- Fig.3:: einen Schnitt (A in Fig.1) im Bereich der Verriegelung und der Druckeinlaß-Öffnung zum Schalten der Ventilklappen,
- Fig.4:: die Anordnung des pyrotechnischen Schaltelementes (Schnitt B in Fig.3),
- Fig.5:: eine Einklappen-Anordnung und
- Fig.6:: eine Doppelklappen-Anordnung als integrales Spritzformteil.

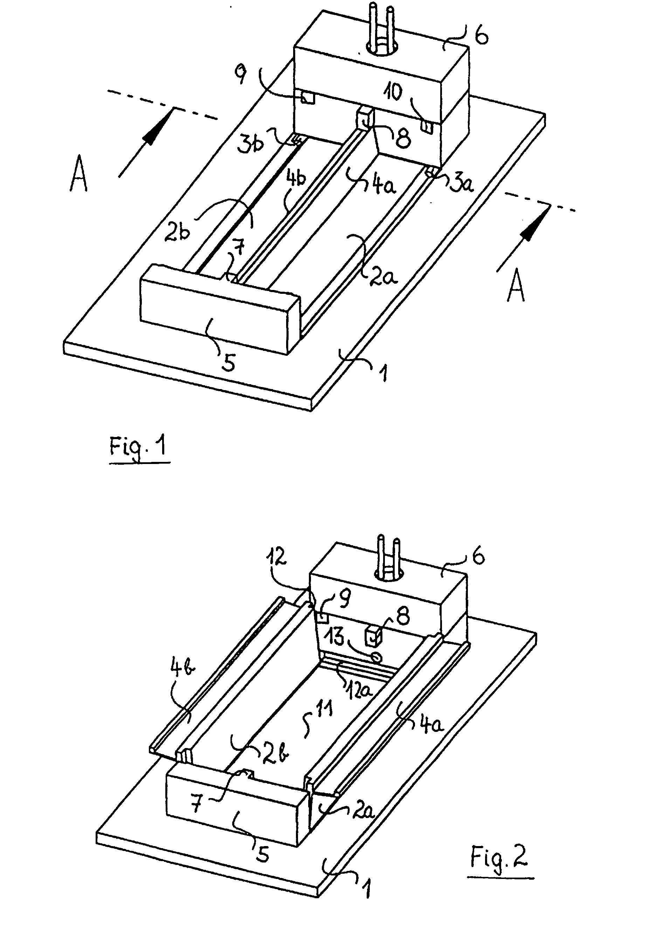

Fig.1 zeigt einen Gehäuseteil 1, der hier Teil eines mit einem nicht dargestellten Aufprallkissen verbundenen Grundgehäuses ist. Zwei Ventilteller 2a, 2b verschließen eine in dem Gehäuseteil 1 vorhandene Öffnung. Die Ventilteller 2a, 2b sind an ihren äußeren Längsseiten über Zapfenlager 3a, 3b in dem Gehäuseteil 1 schwenkbar gehalten.

An den zur Mitte der Öffnung weisenden Längsseiten der Ventilteller 2a, 2b sind gegeneinander geneigte Stegelemente 4a, 4b angeordnet. Stirnseitig zu den Stegelementen 4a, 4b sind in einer Gehäusewand 5,6 nockenförmige Verriegelungen 7, 8 angebracht, die die Stegelemente 4a, 4b in der Geschlossenstellung der Ventilteller 2a, 2b niederhalten. Aufgrund der nur geringen Neigung von vorzugsweise 70 bis 80° der Stegelemente 4a, 4b weisen diese gegen einen aus Richtung der Ventilöffnung wirkenden Druck auf die Ventilteller 2a, 2b eine große Steifigkeit auf, so daß die Ventilöffnung auch nach dem Aufblasen eines Aufprallkissens gegen ungewolltes Öffnen sicher verschlossen bleibt.

An den Gehäusewänden 5, 6 sind weitere Nocken 9, 10 vorgesehen, die zum Festhalten der Ventilteller 2a, 2b in der Offenstellung dienen, wie in Fig.2 dargestellt ist. In dieser Darstellung ist die vorher geschlossene Ventilöffnung 11 zu sehen. Die Ventilteller 2a, 2b sind stirnseitig mit Absätzen 12 versehen, die in der Geschlossenstellung auf entsprechenden Absätzen 12a im Gehäuseteil 1 aufliegen. Die Stegelemente 4a, 4b sind gegenüber dem freien Rand der Ventilteller 2a, 2b etwas versetzt angeordnet und weisen im Ausführungsbeispiel an ihrem oberen Rand zwei gegeneinander gerichtete Nasen auf, die in vorteilhafter Weise einander auch übergreifen können, um eine sichere Niederhaltung beider Ventilklappen gleichzeitig gewährleisten zu können. Ebenso ist es aber auch möglich, die Nasen wegzulassen, so daß die Längskanten der Stegelemente direkt aneinander liegen. Dies kann für die weiter unten beschriebene Ausführung als integrales Spritzformteil vorteilhaft sein. Unterhalb des Niederhalte-Nockens 8 ist eine Öffnung 13 zu sehen, die in der Geschlossenstellung stirnseitig zum Hohlkanal zwischen den Stegelementen 4a, 4b liegt, wie in Fig.3 dargestellt ist.

Fig.3 zeigt eine Schnittdarstellung im Bereich des Niederhalte-Nockens 8 und durch die gegeneinander geneigten Stegelemente 4a, 4b hindurch, die hier ersichtlich einen im Querschnitt trapezförmigen Hohlkanal bilden. Bei der Weglassung der Nasen ergibt sich ersichtlich ein dreieckförmiger Querschnitt.

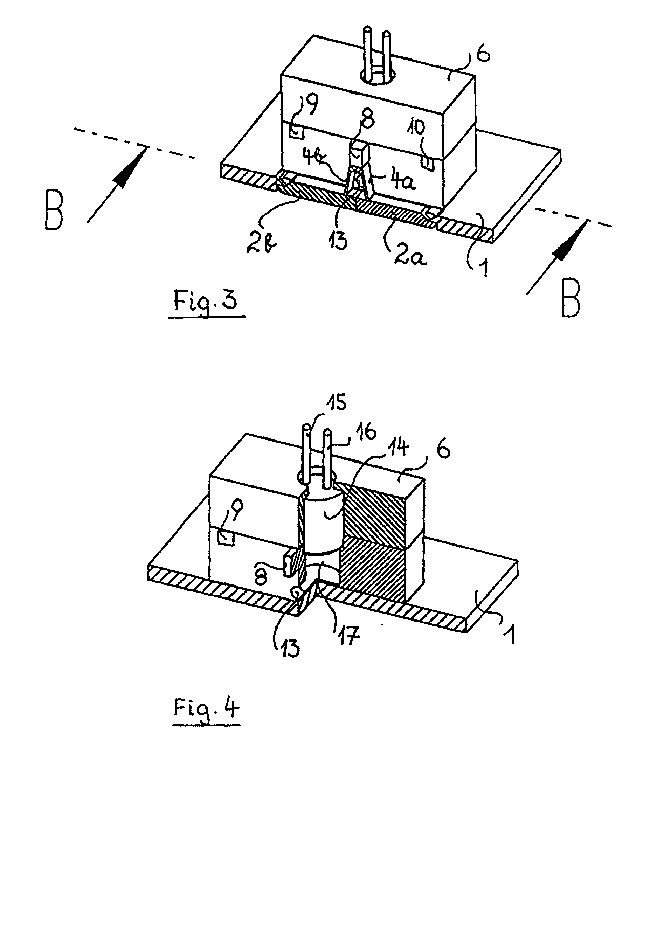

Fig.4 zeigt eine Schnittdarstellung in der Gehäusewand 6, in die ein Druckerzeuger 14 eingefügt ist. Dieser besteht hier aus einem pyrotechnischen System, das über Anschlüsse 15, 16 durch eine nicht dargestellte elektronische Steuereinrichtung gezündet werden kann. Der Teil der Gehäusewand 6, der den Druckerzeuger 14 enthält, wird in diesem Fall vorzugsweise aus Metall gefertigt. Das durch Zündung des Druckerzeugers 14 entstehede Gasvolumen fängt sich zunächst im Hohlraum 17 und wird über die Öffnung 13 in den Hohlkanal zwischen den Stegelementen 4a, 4b gedrückt. Diese werden dadurch auseinander gedrückt und damit aus der Verriegelung durch die Niederhalte-Nocken 7, 8 gelöst. Die Form des Hohlkanals sorgt darüber hinaus noch dafür, daß auf die Stegelemente eine Kraftkomponente wirkt, die die Ventilteller in die Offenstellung beschleunigt. Dies ist ein wesentliches Funktionselement der Ventilklappe. Wenn zu diesem Zeitpunkt auch das Aufprallkissen gefüllt ist, unterstützt das durch die Ventilöffnung 11 ausströmende Gas zusätzlich die Öffnungsbewegung. Zur Sicherung des erzeugten Öffnungsquerschnitts wird der Ventilteller durch die Festhalte-Nocken 9, 10 am Zurückfallen gehindert. Die Festhalte-Nocken 9, 10 können aus einem elastischen Kunststoffmaterial bestehen und eine ballige Form aufweisen, so daß der Ventilteller in der beschleunigten Öffnungsbewegung daran entlang gleiten kann, bei einem evtl. Zurückfallen aber daran hängen bleibt. Es ist jedoch auch möglich, den Festhalte-Nocken als Federhaken auszubilden, der beim Aufschwingen der Ventilklappe in eine entsprechende Ausnehmung in der Gehäusewand eingedrückt wird und danach wieder vorspringt. Selbstverständlich kann ein solcher Federhaken auch in den Ventilteller integriert sein, der nach dem Vorbeilauf an der Kante der Gehäusewand 5, 6 vorspringt und sich an dieser abstützt,um so ein Zurückfallen der Ventilklappe zu verhindern.

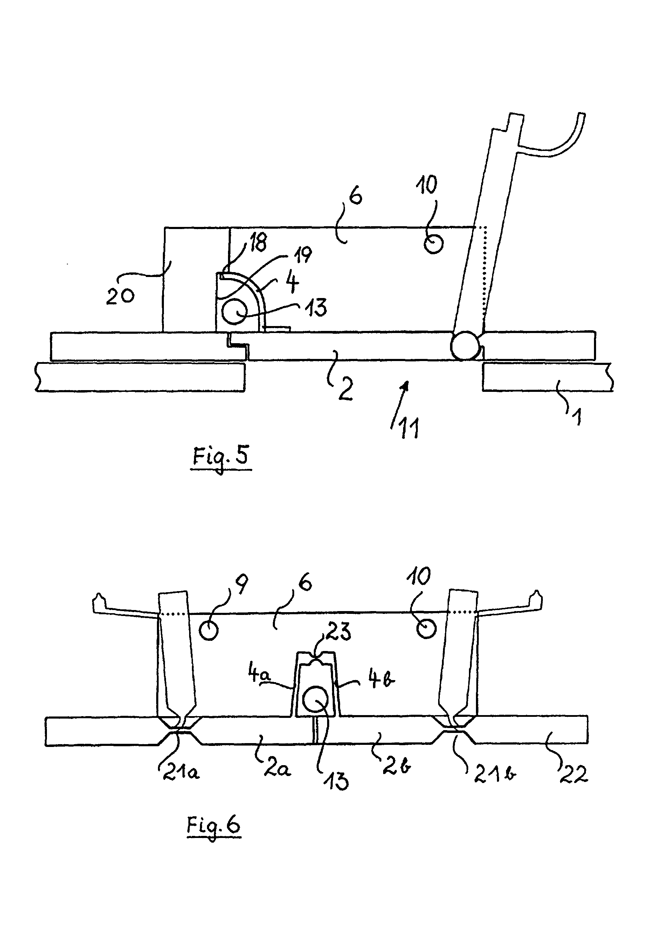

Fig.5 zeigt eine Einklappen-Anordnung als vollständiges Ventilklappen-Bauteil, das auf eine in einem Grundkörper 1 vorhandene Ventilöffnung 11 aufgesetzt werden kann. Das auf den Ventilteller 2 aufgesetzte Stegelement 4 ist hier als stetig gekrümmter, z.B. parabelförmig gebogener Streifen ausgeführt und mit einem abgeknickten Fußelement auf dem Ventilteller 2 befestigt. Die obere Längskante 18 des Stegelementes 4 greift in einen Einschnitt 19 in einer dem Stegelement 4 gegenüber liegenden Gehäusewand 20 ein. Eine durch die Öffnung 13 einströmende Druckwelle deformiert das Stegelement 4, so daß die Verriegelung gelöst wird und der Ventilteller 2 in die ebenfalls dargestellte Offenstellung beschleunigt wird, in der er durch den Festhalte-Nocken 10 vor dem Zurückfallen gehalten wird. Um eine größere Steifigkeit gegen den Innendruck aus einem gefüllten Aufprallkissen zu erzielen, ist es zweckmäßig, das Stegelement 4 in Form einer ebenen Fläche und mit möglichst geringer Neigung gegenüber dem Ventilteller 2 und näher zu dessen Rand auszurichten. Daraus kann sich dann aber ein zu geringer Querschnitt für den Hohlkanal ergeben. Für diesen Fall ist es möglich, den Hohlkanal dem Stegelement 4 gegenüberliegend als Nut oder durch einen tieferen Einschnitt 19 im wesentlichen in die Gehäusewand 20 zu integrieren. Durch Anordnung einer geeignet geformten Nut oberhalb der Ebene, in der die Drehachse der Ventilklappe liegt, kann der Effekt der Entriegelung und gleichzeitigen Beschleunigung in die Offenstellung vorteilhaft beeinflußt werden.

In Fig.6 ist eine Ausführungsform einer Zweiklappen-Anordnung dargestellt, wie sie als Spritzformteil aus einem geeigneten Kunststoff hergestellt werden kann. Die Ventilteller 2a, 2b sind über Biegegelenke 21a, 21b mit einer Grundplatte 22 verbunden. Die angeformten Stegelemente 4a, 4b haben die in den Fig.1 bis 3 dargestellte Form zur Bildung eines trapezförmigen Hohlkanals und sind an den einander gegenüber liegenden Nasen über einen Steg 23 mit verringerter Materialstärke miteinander verbunden. Ein separater Niederhalte-Nocken kann dann entfallen. Einem auf die Ventilteller von unten wirkenden Druck widersteht die Haltekraft des Stegs 23, da dabei über die ganze Länge lediglich eine gleichmäßige Zugkraft senkrecht zum Steg 23 wirkt. Beim Einleiten einer Druckwelle über die Öffnung 13 wirken jedoch während der Ausbreitung der Druckwelle lokal unterschiedliche Reißkräfte, die zu einer Trennung der Stegelemente 4a, 4b führen. Durch geeignete Perforierungen im Steg 23 kann dieses Verhalten optimiert werden. Außerdem ist es möglich, die Druckausbreitung nicht nur von einer Seite her sondern gegenläufig über Öffnungen in beiden Stirnseiten des Hohlkanals auszulösen. Die aufeinander treffenden Druckfronten führen mit Sicherheit zu einer ausreichenden Deformation der Stegelemente 4a, 4b, die diese aus ihrer gegenseitigen Verbindung oder auch Verriegelung löst.

Die beschriebenen Ventilklappen können für unterschiedliche Öffnungsquerschnitte hergestellt und in entsprechende Ventilöffnungen eingesetzt werden. Die elektronisch ausgelöste Druckerzeugung gewährleistet eine individuelle, sichere und schnelle Öffnung der jeweiligen Ventilklappe. Durch geeignete zeitliche Kombination von zu aktivierenden Ventilklappen kann für wechselnde Fahrzeuginsassen und Unfallsituationen auf einfache Weise ein individuell angepaßter Gesamt-Öffnungsquerschnitt auch während des Rückhaltevorgangs vorgewählt werden, der im Bedarfsfall ein optimales Prallverhalten des aufgeblasenen Schutzkissens erzeugt. Durch zeitlich gesteuerte Aktivierung einzelner Ventilklappen kann zusätzlich auch das Prallverhalten bei einem mehrfachen Rückprall beeinflußt werden.

### Bezugszeichenliste

- Gehäuseteil: 1
- Ventilteller: 2, 2a, 2b
- Zapfenlager: 3a, 3b
- Stegelemente: 4, 4a, 4b
- Gehäusewand: 5, 6, 20
- Niederhalte-Nocken: 7, 8
- Festhalte-Nocken: 9, 10
- Ventilöffnung: 11
- Absätze: 12, 12a
- Öffnung: 13
- Druckerzeuger: 14
- Anschlüsse: 15, 16
- Hohlraum: 17
- Längskante: 18
- Einschnitt: 19
- Biegegelenke: 21a, 21b
- Grundplatte: 22
- Steg: 23

## Patentansprüche

1. Schaltbare Ventilklappe mit mindestens einem um eine Längsachse schwenkbar in einem Gehäuseteil (1) angeordneten Ventilteller (2, 2a, 2b) zum Verschließen einer in dem Gehäuseteil (1) vorgesehenen Ventilöffnung (11), **dadurch gekennzeichnet, daß**
auf der Oberseite des Ventiltellers (2, 2a, 2b) ein parallel zu dessen Längsachse ausgerichtetes Stegelement (4, 4a, 4b) angeformt ist, dessen Fläche gegen eine angrenzende Gehäusewand (20) oder das Stegelement (4, 4a, 4b) eines zweiten Ventiltellers (2, 2a, 2b) geneigt ist und mit der Gehäusewand (20) oder dem Stegelement (4, 4a, 4b) des zweiten Ventiltellers (2, 2a, 2b) einen Hohlkanal bildet, daß
die freie Längskante (18) des Stegelements (4, 4a, 4b) in der Geschlossenstellung des Ventiltellers (2, 2a, 2b) in einer Verriegelung (7, 8) gehalten wird und daß
in dem Gehäuseteil (1) eine mindestens einer Stirnseite des Hohlkanals zugeordnete Öffnung (13) vorgesehen ist, die mit einem Druckerzeuger (14) in Verbindung steht, durch dessen Auslösung das Stegelement (4, 4a, 4b) unter elastischer Deformation aus der Verriegelung (7, 8) lösbar ist und der Ventilteller (2, 2a, 2b) in die Offenstellung schwenkbar ist.

2. Schaltbare Ventilklappe nach Anspruch 1, **dadurch gekennzeichnet, daß** zumindest ein Teil des Hohlkanals durch eine Nut (19) in der Gehäusewand (20) gebildet wird, die dem Stegelement (4) gegenüberliegt.

3. Schaltbare Ventilklappe nach Anspruch 1 oder 2, **dadurch gekennzeichnet, daß** die Schwenkachse als Zapfenlager (3a, 3b) ausgebildet ist.

4. Schaltbare Ventilklappe nach Anspruch 1 oder 2, **dadurch gekennzeichnet, daß** die Schwenkachse als Biegegelenk (21a, 21b) ausgebildet ist.

5. Schaltbare Ventilklappe nach einem der Ansprüche 1 bis 4, **dadurch gekennzeichnet, daß** das Stegelement auf dem Ventilteller unter einem zum Rand weisenden Neigungswinkel von etwa 70 bis 80° angeordnet ist.

6. Schaltbare Ventilklappe nach einem der Ansprüche 1 bis 5, **dadurch gekennzeichnet, daß** der Querschnitt des Hohlkanals parabelförmig ist. (Fig.5)

7. Schaltbare Ventilklappe nach einem der Ansprüch 1 bis 5, **dadurch gekennzeichnet, daß** der Querschnitt des Hohlkanals trapezförmig ist. (Fig.6)

8. Schaltbare Ventilklappe nach einem der Ansprüche 1, 3, 4, 5, 7, **dadurch gekennzeichnet, daß** die auf das Stegelement (4, 4a, 4b) wirkende Verriegelung aus einem Niederhalte-Nocken (7, 8) besteht, der an der zum Hohlkanal stirnseitigen Gehäusewandung (5, 6) angebracht ist.

9. Schaltbare Ventilklappe nach einem der Ansprüche 1 bis 6, **dadurch gekennzeichnet, daß** die auf das Stegelement (4, 4a, 4b) wirkende Verriegelung aus einem Einschnitt (19) in der dem Stegelement (4, 4a, 4b) gegenüberliegenden Gehäusewandung (20) besteht.

10. Schaltbare Ventilklappe nach einem der Ansprüche 1, 3, 4, 5, 7, 8, **dadurch gekennzeichnet, daß** die Ventilöffnung (11) durch zwei Ventilteller (2a, 2b) verschlossen wird, deren Stegelemente gegeneinander geneigt sind und längs ihrer Längskante (18) in einer lösbaren Verbindung zusammengefügt sind.

11. Schaltbare Ventilklappe nach einem der Ansprüche 1 bis 10, **dadurch gekennzeichnet, daß** die Ventilteller (2, 2a, 2b) in der Offenstellung an einem am Gehäuseteil (5, 6) angeformten Festhalte-Nocken (9, 10) arretiert sind.

12. Schaltbare Ventilklappe nach einem der Ansprüche 1 bis 11, **dadurch gekennzeichnet, daß** der Ventilteller (2, 2a, 2b) und das Stegelement (4, 4a, 4b) als integrales Bauteil in Spritzformtechnik aus Kunststoff gefertigt sind.

13. Schaltbare Ventilklappe nach einem der Ansprüche 1 bis 12, **dadurch gekennzeichnet, daß** das Gehäuseteil (22) mit Ventilteller (2a, 2b) und Stegelement (4a, 4b) als integrales Bauteil in Spritzformtechnik aus Kunststoff gefertigt ist.

14. Schaltbare Ventilklappe nach einem der Ansprüche 1 bis 13, **dadurch gekennzeichnet, daß** beiden Stirnseiten des Hohlkanals jeweils ein Druckerzeuger (14) zugeordnet ist.

15. Schaltbare Ventilklappe nach einem der Ansprüche 1 bis 14, **dadurch gekennzeichnet, daß** als Druckerzeuger (14) ein elektrisch aktivierbarer pyrotechnischer Gaserzeuger vorgesehen ist.

16. Schaltbare Ventilklappe nach einem der vorhergehenden Ansprüche, **gekennzeichnet durch** ihre Verwendung bei einem mit Gas befüllbaren Prallkissen zum Schutz von Insassen in einem Fahrzeug.

17. Schaltbare Ventilklappe nach Anspruch 16, **dadurch gekennzeichnet, daß** mehrere, unabhängig voneinander schaltbare Ventilklappen vorgesehen sind.

## Claims

1. Switchable valve flap with at least one valve plate (2, 2a, 2b), which is arranged in a housing part (1) to be pivotable about a longitudinal axis, for closing a valve opening (11) provided in the housing part (1), **characterised in that** integrally formed on the upper side of the valve plate (2, 2a, 2b) is a web element (4, 4a, 4b) which is oriented parallel to the longitudinal axis thereof and the surface of which is inclined relative to an adjoining housing wall (20) or the web element (4, 4a, 4b) of a second valve plate (2, 2a, 2b) and forms with the housing wall (20) or the web element (4, 4a, 4b) of the second valve plate (2, 2a, 2b) a hollow channel, that the free longitudinal edge (18) of the web element (4, 4a, 4b) in the closed setting of the valve plate (2, 2a, 2b) is held in a lock (7, 8) and that in the housing part (1) there is provided an opening (13) which is associated with at least one end of the hollow channel and is disposed in connection with a pressure generator (14), through the triggering of which the web element (4, 4a, 4b) is releasable, under resilient deformation, from the lock (7, 8) and the valve plate (2, 2, 2b) is pivotable into the open setting.

2. Switchable valve flap according to claim 1, **characterised in that** at least a part of the hollow channel is formed by a groove (19) in the housing wall (20), which is disposed opposite the web element (4).

3. Switchable valve flap according to claim 1 or 2, **characterised in that** the pivot axis is formed as a pin bearing (3a, 3b).

4. Switchable valve flap according to claim 1 or 2, **characterised in that** the pivot axis is formed as a bending joint (21a, 21b).

5. Switchable valve flap according to one of claims 1 to 4, **characterised in that** the web element is arranged on the valve plate at an angle of inclination, which faces the edge, of approximately 70 to 80°.

6. Switchable valve flap according to one of claims 1 to 5, **characterised in that** the cross-section of the hollow channel is parabolic (Fig. 5).

7. Switchable valve flap according to one of claims 1 to 5, **characterised in that** the cross-section of the hollow channel is trapezium-shaped (Fig. 6).

8. Switchable valve flap according to one of claims 1, 3, 4, 5, 7, **characterised in that** the lock acting on the web element (4, 4a, 4b) consists of a holding-down dog (7, 8) which is mounted at the housing wall (5, 6) at the end towards the hollow channel.

9. Switchable valve flap according to one of claims 1 to 6, **characterised in that** the lock acting on the web element (4, 4a, 4b) consists of an incision in the housing wall (20) opposite the web element (4, 4a, 4b).

10. Switchable valve flap according to one of claims 1, 3, 4, 5, 7, 8, **characterised in that** the valve opening (11) is closed by two valve plates (2a, 2b), the web elements of which are inclined relative to one another and are joined together along the longitudinal edge (18) thereof to form a detachable connection.

11. Switchable valve flap according to one of claims 1 to 10, **characterised in that** the valve plates (2, 2a, 2b) in the open setting are locked to a fixing dog (9, 10) integrally formed at the housing part (5, 6).

12. Switchable valve flap according to one of claims 1 to 11, **characterised in that** the valve plate (2, 2a, 2b) and the web element (4, 4a, 4b) are produced as an integral component in injection-moulding technique from synthetic material.

13. Switchable valve flap according to one of claims to 12, **characterised in that** the housing part (22) together with valve plate (2a, 2b) and web element (4a, 4b) is produced as an integral component in injection-moulding technique from synthetic material.

14. Switchable valve flap according to one of claims to 13, **characterised in that** the two ends of the hollow channel are each associated with a respective pressure generator (14).

15. Switchable valve flap according to one of claims to 14, **characterised in that** the pressure generator (14) is an electrically activatable pyrotechnical gas producer.

16. Switchable valve flap according to one of the preceding claims, **characterised by** use thereof in an impact cushion, which is fillable with gas, for protection of occupants in a vehicle.

17. Switchable valve flap according to claim 16, **characterised in that** several valve flaps switchable independently of one another are provided.

## Revendications

1. Soupape pivotante débrayable avec au moins une tête de soupape (2, 2a, 2b) disposée pour pouvoir pivoter autour d'un axe longitudinal dans une partie de la caisse (1) pour la fermeture d'une ouverture de soupape (11) prévue dans la partie de la caisse (1), **caractérisée en ce que** sur le côté supérieur de la tête de soupape (2, 2a, 2b) est formé un élément transversal (4, 4a, 4b) dirigé parallèlement à l'axe longitudinal de celle-ci, dont la surface est inclinée contre une paroi de caisse (20) adjacente, ou bien l'élément transversal (4, 4a, 4b) d'une deuxième tête de soupape est inclinée et forme un canal creux avec la paroi de caisse (20) ou l'élément transversal (4, 4a, 4b) de la deuxième tête de soupape (2, 2a, 2b), que l'arête longitudinale libre (18) de l'élément transversal (4, 4a, 4b) est maintenue dans la position fermée de la tête de soupape (2, 2a, 2b) dans un verrouillage (7, 8) et que dans la partie de caisse (1) est prévue au moins une ouverture (13) attribuée à un côté frontal du canal creux, qui se trouve en connexion avec le générateur de pression (14), par le déclenchement duquel l'élément transversal (4, 4a, 4b) peut être libéré par déformation élastique du verrouillage (7, 8) et la tête de soupape (2, 2a, 2b) peut pivoter en position ouverte.

2. Soupape pivotante débrayable selon la revendication 1, **caractérisée en ce qu'**au moins une partie du canal creux est formée par une rainure (19) dans la paroi de caisse (20) qui se trouve face à l'élément transversal (4).

3. Soupape pivotante débrayable selon la revendication 1 ou 2, **caractérisée en ce que** l'axe de pivotement est construit comme un palier de tourillon (3a, 3b).

4. Soupape pivotante débrayable selon la revendication 1 ou 2, **caractérisée en ce que** l'axe de pivotement est construit comme un joint articulé de flexion (21a, 21b).

5. Soupape pivotante débrayable selon l'une quelconque des revendications 1 à 4, **caractérisée en ce que** l'élément transversal est disposé sur la tête de soupape à un angle d'inclinaison d'environ 70° à 80° par rapport au bord.

6. Soupape pivotante débrayable selon l'une quelconque des revendications 1 à 5, **caractérisée en ce que** la coupe transversale du canal creux est en forme de parabole (figure 5).

7. Soupape pivotante débrayable selon l'une quelconque des revendications 1 à 5, **caractérisée en ce que** la coupe transversale du canal creux est en forme de trapèze (figure 6).

8. Soupape pivotante débrayable selon l'une quelconque des revendications 1, 3, 4, 5 ou 7, **caractérisée en ce que** le verrouillage qui agit sur l'élément transversal (4, 4a, 4b) consiste en une saillie de suppression (7, 8), qui est posée sur le côté frontal de la paroi de caisse (5, 6) vers le canal creux.

9. Soupape pivotante débrayable selon l'une quelconque des revendications 1 à 6, **caractérisée en ce que** le verrouillage qui agit sur l'élément transversal (4, 4a, 4b) consiste en un creux (19) dans la paroi de caisse (20) faisant face à l'élément transversal (4, 4a, 4b).

10. Soupape pivotante débrayable selon l'une quelconque des revendications 1, 3, 4, 5, 7 ou 8, **caractérisée en ce que** l'ouverture de soupape (11) est fermée par deux têtes de soupape (2a, 2b), dont les éléments transversaux sont inclinés l'un contre l'autre et sont joints de manière amovible le long de son arête longitudinale (18).

11. Soupape pivotante débrayable selon l'une quelconque des revendications 1 à 10, **caractérisée en ce que** les têtes de soupape (2, 2a, 2b) sont arrêtées en position ouverte par une saillie d'arrêt (9, 10) formée sur la partie de la caisse (5, 6).

12. Soupape pivotante débrayable selon l'une quelconque des revendications 1 à 11, **caractérisée en ce que** les têtes de soupape (2, 2a, 2b) et l'élément transversal (4, 4a, 4b) sont fabriqués selon une technique de moule à injection comme un composant intégré en matière synthétique.

13. Soupape pivotante débrayable selon l'une quelconque des revendications 1 à 12, **caractérisée en ce que** la partie de caisse (22) avec les têtes de soupapes (2a, 2b) et l'élément transversal (4a, 4b) est fabriquée selon une technique de moule à injection comme un composant intégré en matière synthétique.

14. Soupape pivotante débrayable selon l'une quelconque des revendications 1 à 13, **caractérisée en ce qu'**un générateur de pression (14) est attribué à chacun des deux côtés frontaux du canal creux.

15. Soupape pivotante débrayable selon l'une quelconque des revendications 1 à 14, **caractérisée en ce qu'**un générateur de gaz pyrotechnique activable électriquement est prévu comme générateur de pression (14).

16. Soupape pivotante débrayable selon l'une quelconque des revendications précédentes, **caractérisée en ce qu'**elle est utilisée dans un airbag pouvant être rempli de gaz pour la protection des passagers d'un véhicule.

17. Soupape pivotante débrayable selon la revendication 16, **caractérisée en ce que** sont prévues plusieurs soupapes pivotantes, indépendantes les unes des autres.
